# EUROPÄISCHE PATENTANMELDUNG

(11) **EP 3 836 165 A1**
(43) Veröffentlichungstag der Anmeldung: **16.06.2021**
(21) Anmeldenummer: 20000437.2
(22) Anmeldetag: 03.12.2020
(51) Int. Cl.: H01B 3/44, B32B 27/32, H01B 13/14

(54) **ISOLIERTES ELEKTRISCH LEITFÄHIGES ELEMENT UND VERFAHREN ZU DESSEN HERSTELLUNG**

(30) Priorität: 11.12.2019 DE 202019005067 U
(71) Anmelder: HEW-KABEL GmbH, 51688 Wipperfürth (DE)
(72) Erfinder: Hollas, Ingo, 47608 Geldern (DE)
(74) Vertreter: Rebbereh, Cornelia

(57) **Zusammenfassung**

Bei einem isolierten elektrisch leitfähigen Element (1), umfassend zumindest ein inneres elektrisch leitfähiges Element (2) und zumindest ein äußeres Isolationselement (4), ist das zumindest eine äußere Isolationselement (4) fest mit dem zumindest einen inneren elektrisch leitfähigen Element (2) verbunden, wobei zum Erzeugen einer festen Verbindung zwischen dem zumindest einen inneren elektrisch leitfähigen Element (2) und dem zumindest einen äußeren Isolationselement (4) zumindest ein Primer (3) vorgesehen ist. Bei einem Verfahren zum Herstellen eines solchen isolierten elektrisch leitfähigen Elements (1) wird zumindest ein Primer (3) durch Extrusion auf die Oberfläche (20) des zumindest einen inneren elektrisch leitfähigen Elements (2) und zumindest ein äußeres Isolationselement (4) durch Extrusion auf den zumindest einen Primer (3) aufgebracht.

## Beschreibung

Die Erfindung betrifft ein isoliertes elektrisch leitfähiges Element, umfassend zumindest ein inneres elektrisch leitfähiges Element und zumindest ein äußeres Isolationselement, und ein Verfahren zum Herstellen eines solchen isolierten elektrisch leitfähigen Elements.

Derartige isolierte elektrisch leitfähige Elemente sind im Stand der Technik bekannt, insbesondere in Form von mit außenseitiger Isolierummantelung versehenen elektrischen Leitern bzw. Kabeln. Bei zahlreichen Anwendungen solcher isolierter elektrischer Leiter ist es gewünscht, das äußere Isolationselement von dem inneren elektrisch leitfähigen Element abheben, also ein Kabel abisolieren, zu können. Bei diesen Anwendungen ist es somit gewünscht, eine geringe Haftung des äußeren Isolationselements auf dem inneren elektrisch leitfähigen Element vorzusehen, um das innere elektrisch leitfähige Element an z.B. eine Energiequelle oder ein anderes elektrisch leitfähiges Element oder eine mit Daten oder Strom zu versorgende Komponente anschließen zu können.

Bei anderen Anwendungen kann es jedoch gewünscht sein, eine möglichst große Haftung des äußeren Isolationselements auf dem inneren elektrisch leitfähigen Element vorzusehen. Grundsätzlich besteht hierbei das Problem, dass bei Vorsehen eines äußeren Isolationselements aus einem Kunststoffmaterial die Haftung auf einem aus Metall bestehenden inneren elektrisch leitfähigen Element eher gering sein wird aufgrund der Oberflächeneigenschaften des inneren elektrisch leitfähigen Elements, das beispielsweise aus Kupfer besteht. Mit dieser Problematik befasst sich beispielsweise die EP 3 226 258 A1. Als Lösung schlägt diese Druckschrift des Standes der Technik vor, einen elektrischen Leiter aus Kupfer oder einer Legierung mit einem hohen Kupferanteil oder Aluminium oder sonstigen elektrisch leitfähigen Materialien sowie eine Beschichtung aus thermoplastischem Kunststoff vorzusehen, wobei der elektrische Leiter unter einer Schutzgasatmosphäre in einem Gasplasma mit Ionen des Schutzgases beschossen wird, um eine auf der Oberfläche des Leiters ausgebildete Oxidschicht zu entfernen und/oder die Oberflächenenergie des Leiters zu erhöhen. Nachfolgend wird die Beschichtung auf die Oberfläche des Leiters aufgebracht, wobei zumindest ein Teil der Beschichtung unter Schutzgasatmosphäre auf den Leiter aufgebracht wird.

Allerdings hat es sich gezeigt, dass weder eine Coronavorbehandlung noch eine Plasmavorbehandlung noch ein Ätzen der Oberfläche des elektrisch leitfähigen Elements dazu geführt haben, dass das äußere Isolationselement so fest auf dem inneren elektrisch leifähigen Element haftet, dass ein Ablösen nicht oder im Wesentlichen nicht mehr möglich ist.

Der vorliegenden Erfindung liegt daher die Aufgabe zugrunde, ein isoliertes elektrisch leitfähiges Element, umfassend zumindest ein inneres elektrisch leitfähiges Element und zumindest ein äußeres Isolationselement, vorzusehen, bei dem kein oder zumindest im Wesentlichen kein Abisolieren, also Entfernen, des äußeren Isolationselements von dem inneren leitfähigen Element möglich ist.

Die Aufgabe wird für ein isoliertes elektrisch leitfähiges Element nach dem Oberbegriff des Anspruchs 1 dadurch gelöst, dass das zumindest eine äußere Isolationselement fest mit dem zumindest einen inneren elektrisch leitfähigen Element verbunden ist, wobei zum Erzeugen einer festen Verbindung zwischen dem zumindest einen inneren elektrisch leitfähigen Element und dem zumindest einen äußeren Isolationselement zumindest ein Primer vorgesehen ist. Die Aufgabe wird für ein Verfahren nach dem Oberbegriff des Anspruchs 11 dadurch gelöst, dass zumindest ein Primer durch Extrusion auf die Oberfläche zumindest eines inneren elektrisch leitfähigen Elements und zumindest ein äußeres Isolationselement durch Extrusion auf den zumindest einen Primer aufgebracht wird. Weiterbildungen der Erfindung sind in den abhängigen Ansprüchen definiert.

Dadurch wird ein isoliertes elektrisch leitfähiges Element geschaffen, bei dem das Abisolieren, also Entfernen des zumindest einen äußeren Isolationselements von dem zumindest einen inneren elektrisch leitfähigen Element durch das Zwischenfügen des zumindest einen Primers sicher verhindert wird. Der Primer ist so ausgebildet, dass er einerseits fest mit der Oberfläche des zumindest einen inneren elektrisch leitfähigen Elements verbunden ist und andererseits ebenfalls eine feste Verbindung mit dem zumindest einen äußeren Isolationselement eingeht. Vorteilhaft ist der zumindest eine Primer mit der Oberfläche des zumindest einen inneren elektrisch leitfähigen Elements aufgrund chemischer Verbindung fest verbunden. Dies bedeutet, dass der Primer eine chemische Verbindung mit zumindest einem Bestandteil, der im Bereich der Oberfläche des zumindest einen inneren elektrisch leitfähigen Elements vorgesehen ist, eingeht. Der Primer dient als Haftvermittler. Er umfasst bifunktionelle Moleküle, die anorganische Stoffe mit organischen verbinden können. Die Wirkungsweise des Primers basiert auf der Erhöhung der Benetzbarkeit der Substratoberflächen sowie der Möglichkeit, chemische oder physikalische Bindungen einzugehen.

Das zumindest eine innere elektrisch leitfähige Element kann beispielsweise zumindest im Bereich seiner Oberfläche aus zumindest einem Metall oder zumindest einer Metalllegierung oder zumindest einem Material mit einer Hydroxyl-Gruppe oder einer Anhydrid-Gruppe bestehen. Der Primer geht mit der Hydroxyl-Gruppe oder Anhydrid-Gruppe eine chemische Verbindung ein, reagiert also mit einer dieser Gruppen bzw. diesen Gruppen. Durch das Eingehen einer solchen chemischen Verbindung wird somit zwischen dem Primer und der Oberfläche des zumindest einen inneren elektrisch leitfähigen Elements eine feste Verbindung geschaffen. Dementsprechend kann das zumindest eine innere elektrisch leitfähige Element zumindest im Bereich seiner Oberfläche eines oder mehrere der Materialien Kohlenstoff, Kohlenstofffasern, Metall, wie Kupfer, Silber, Gold, Nickel, Zinn oder eine oder mehrere Metalllegierungen enthalten, das oder die mit im Primer enthaltenen funktionalen Gruppen eine Verbindung eingehen. Primer können polyolefinische Primer bzw. Haftvermittler, Silanvermittler und andere metallorganische Primer bzw. Haftvermittler sein. Beispielsweise bei einem polyolefinischen Primer werden Polymere durch verschiedene funktionelle Gruppen modifiziert. Zumindest eine der funktionellen Gruppen enthält Sauerstoffatome. Durch die hohe Elektronegativität der Sauerstoffatome in der funktionellen Gruppe entstehen negative Partialladungen, die mit stark positiv teilgeladenen Wasserstoffatomen in Wechselwirkung treten können. Diese Dipol-Dipol-Wechselwirkung oder auch Wasserstoffbrückenbindung bildet die stärkste Wechselwirkung bei den schwachen Bindungen aus. Da an allen Metalloberflächen Wasserstoffatome sitzen, führt die Dipol-Dipol-Wechselwirkung zu einer hervorragenden Benetzung und Adhäsion an der Oberfläche des zumindest einen inneren elektrisch leitfähigen Elements.

Der zumindest eine Primer ist oder wird vorteilhaft mit dem zumindest einen äußeren Isolationselement stoffschlüssig verbunden. Das zumindest eine äußere Isolationselement besteht vorteilhaft aus zumindest einem Kunststoffmaterial. Beispielsweise kann das zumindest eine äußere Isolationselement aus zumindest einem Fluorpolymer, wie z.B. PFA (Polytetrafluorethylenperfluoralkoxyvinylether), PTFE (Polytetrafluorethylen), FEP (Perfluorethylenpropylen), ETFE (Ethylen-Tetrafluorethylen) oder einem oder mehreren weiteren/anderen Fluorpolymeren bestehen, insbesondere aus modifiziertem PFA. Durch den Primer werden Acetat-Gruppen (Essigsäureester) in die Polymerkette des zumindest einen Fluorpolymers des zumindest einen äußeren Isolationselements, wie PFA (Polytetrafluorethylenperfluoralkoxyvinylether), während der Polymerisation eingebracht. Wie bereits erwähnt, entstehen durch die hohe Elektronegativität der Sauerstoffatome in der funktionellen Gruppe negative Partialladungen, die mit stark positiv teilgeladenen Wasserstoffatomen in Wechselwirkung treten können. Durch die an der Oberfläche des zumindest einen inneren elektrisch leitfähigen Elements sitzenden Wasserstoffatome führt die bereits erwähnte Dipol-Dipol-Wechselwirkung zu einer hervorragenden Benetzung und Adhäsion des zumindest einen äußeren Isolationselements an der Oberfläche des zumindest einen inneren elektrisch leitfähigen Elements. Selbstverständlich kann das zumindest ein äußere Isolationselement auch aus einem anderen Polymermaterial bestehen. Dies kann in Abhängigkeit von dem jeweiligen Anwendungsfall individuell ausgewählt werden. Das zumindest eine äußere Isolationselement kann auch mehrschichtig ausgebildet sein und aus mehr als einem Kunststoffmaterial bestehen. Der zumindest eine Primer kann aus einem funktionalisierten Fluorpolymer bestehen.

Das Primermaterial wird vorteilhaft durch Extrusion auf die Oberfläche bzw. Außenseite des zumindest einen inneren elektrisch leitfähigen Elements aufgebracht. Ebenfalls kann das zumindest eine äußere Isolationselement durch Extrusion auf den Primer aufgebracht werden. Beispielsweise kann ein Aufbringen durch Coextrusion erfolgen. Hierbei kann beispielsweise eine sogenannte Skinhülse oder eine Pinole verwendet werden, um die zumindest zwei Materialien, einerseits den zumindest einen Primer und andererseits das zumindest eine äußere Isolationselement, übereinander auf dem inneren elektrisch leitfähigen Element problemlos und in der gewünschten Stärke aufbringen zu können. Beispielsweise kann kontinuierlich oder in Abständen der äußere Durchmesser des mit dem zumindest einen Primer versehenen inneren elektrisch leitfähigen Elements kontrolliert werden, um vor dem Aufbringen des zumindest einen äußeren Isolationselements die Schichtdicke des Primers überwachen und optimal und kontinuierlich gleichbleibend einstellen zu können.

Das entstandene isolierte elektrisch leitfähige Element kann beispielsweise ein durch das zumindest eine Isolationselement außenseitig isolierter elektrischer Leiter, insbesondere ein außenseitig isolierter Rechteckleiter oder Rundleiter sein. Auch andere Querschnittformen eines solchen außenseitig isolierten elektrischen Leiters sind möglich. Die jeweilige Schichtdicke des zumindest einen Primers und des zumindest einen äußeren Isolationselements, das den elektrischen Leiter, also das innere elektrisch leitfähige Element, umgibt, kann anwendungsspezifisch individuell eingestellt werden. Ein solches Einstellen kann z.B. über eine bereits genannte Skinhülse oder Pinole erfolgen.

Zur näheren Erläuterung der Erfindung wird im Folgenden ein Ausführungsbeispiel von dieser näher anhand der Zeichnungen beschrieben. Diese zeigen in:
- Figur 1: eine Querschnittsansicht durch ein erfindungsgemäßes isoliertes elektrisch leitfähiges Element in Form eines außenseitig isolierten Rundleiters und
- Figur 2: eine Querschnittsansicht durch eine zweite Ausführungsform eines erfindungsgemäßen elektrisch leitfähigen Elements in Form eines außenseitig isolierten Rechteckleiters.

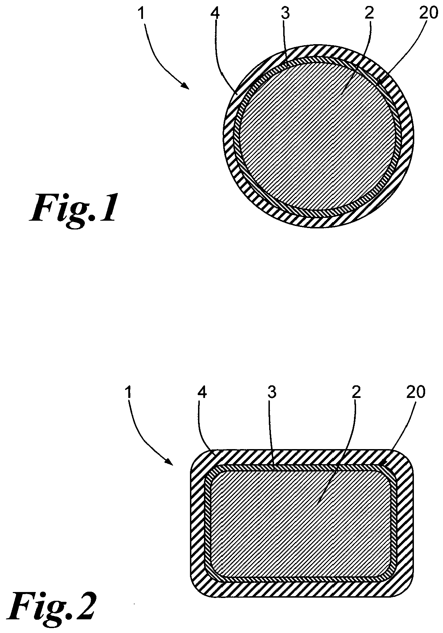

In Figur 1 ist eine Querschnittsansicht eines isolierten elektrisch leitfähigen Elements in Form eines außenseitig isolierten elektrischen Leiters 1, hier in Form eines Rundleiters, gezeigt. Der außenseitig isolierte elektrische Leiter 1 weist ein inneres leitfähiges Element 2, darüber einen Primer 3 und darüber ein äußeres Isolationselement 4 auf. Das innere elektrisch leitfähige Element 2 ist über eine chemische Verbindung fest mit dem Primer 3 und dieser stoffschlüssig mit dem äußeren Isolationselement 4 verbunden. Das innere elektrisch leitfähige Element 2 weist zumindest im Bereich seiner Oberfläche 20 ein Metall, wie Kupfer, Silber, Gold, Nickel, Zinn oder ein anderes Metall, Kohlenstoff oder zumindest eine Metalllegierung oder Kohlenstofffasern auf, mit der bzw. dem/denen der Primer 3 chemisch reagiert. Beispielsweise kann das innere elektrisch leifähige Element 2 ein blanker Kupferleiter sein oder zumindest im Bereich seiner Oberfläche 20 zumindest eine Kupferlegierung aufweisen. Insbesondere reagiert der Primer mit einer Hydroxyl (OH)-Gruppe oder einer Anhydrid-Gruppe, die sich zumindest im Bereich der Oberfläche 20 des inneren elektrisch leitfähigen Elements 2 befindet bzw. Bestandteil des Materials des inneren leitfähigen Elements 2 ist oder das innere elektrisch leitfähige Element 2 aus einem solchen Material besteht. Der Primer 3 ist beispielsweise ein funktionalisiertes Fluorpolymer, das eine chemische Verbindung mit den vorstehenden Materialien eingehen kann. Ein solches funktionalisiertes Fluorpolymer weist zu diesem Zweck zumindest eine funktionale Gruppe auf, die eine chemische Verbindung mit den vorstehenden Materialien eingeht.

Das äußere Isolationselement 4 kann z.B. ebenfalls aus zumindest einem Polymer, insbesondere PFA bzw. modifiziertem PFA, bestehen. Ein Primer 3 aus einem funktionalisierten Fluorpolymer kann mit PFA eine gute und dichte stoffschlüssige Verbindung eingehen.

Der außenseitig isolierte elektrische Leiter 1 gemäß Figur 1 ist als Rundleiter ausgebildet und weist dementsprechend einen runden Querschnitt auf. Neben dieser Ausführungsvariante der Formgebung können noch zahlreiche weitere vorgesehen werden, wobei in Figur 2 eine Ausführungsvariante in Form eines Rechteckleiters gezeigt ist. Dieser weist ebenfalls das innere elektrisch leitfähige Element 2, das ein elektrischer Leiter ist, umgeben von dem Primer 3 und dieser seinerseits ummantelt von dem äußeren Isolationselement 4 auf. Auch andere Querschnittsformen einerseits des inneren elektrisch leitfähigen Elements 2 und andererseits der dieses umgebenden Schichten des Primers 3 und des äußeren Isolationselements 4 sind möglich.

Insbesondere werden der Primer 3 und das äußere Isolationselement 4 durch Extrusion, insbesondere Coextrusion, auf der Oberfläche 20 bzw. der Außenseite des inneren elektrisch leitfähigen Elements 2, insbesondere des elektrischen Leiters, aufgebracht. Hierbei kann eine Skinhülse oder Pinole zum Einstellen einer vorgebbaren Schichtdicke der Materialien des Primers und des äußeren Isolationselements übereinander auf der Oberfläche des inneren elektrisch leitfähigen Elements vorgesehen werden. Der äußere Durchmesser des mit dem Primer versehenen inneren elektrisch leitfähigen Elements kann kontinuierlich oder in Abständen kontrolliert werden zum Überwachen und/oder Einstellen der Schichtdicke des Primers vor dem Aufbringen des äußeren Isolationselements.

Neben den im Vorstehendem beschriebenen und in den Figuren gezeigten Ausführungsvarianten eines isolierten elektrisch leitfähigen Elements, das zumindest ein inneres elektrisch leitfähiges Element und zumindest ein äußeres Isolationselement aufweist, können noch zahlreiche weitere gebildet werden, insbesondere auch beliebige Kombinationen der vorstehend genannten Merkmale, wobei das zumindest eine äußere Isolationselement fest mit dem zumindest einen inneren elektrisch leitfähigen Element verbunden ist, somit ein Abisolieren, also Lösen, des äußeren Isolationselements von dem inneren elektrisch leitfähigen Element bzw. elektrischen Leiter nicht oder zumindest nicht ohne Zerstören der Oberfläche des inneren elektrisch leitfähigen Elements möglich ist. Zum Erzeugen einer solchen festen Verbindung zwischen dem zumindest einen inneren elektrisch leitfähigen Element und dem zumindest einen äußeren Isolationselement wird bzw. ist zumindest ein Primer vorgesehen, der sowohl mit dem äußeren Isolationselement als auch dem inneren elektrisch leitfähigen Element fest verbunden ist bzw. wird.

### Bezugszeichenliste

- 1: außenseitig isolierter elektrischer Leiter
- 2: inneres elektrisch leitfähiges Element
- 3: Primer
- 4: äußeres Isolationselement
- 20: Oberfläche

## Patentansprüche

1. Isoliertes elektrisch leitfähiges Element (1), umfassend zumindest ein inneres elektrisch leitfähiges Element (2) und zumindest ein äußeres Isolationselement (4),
**dadurch gekennzeichnet, dass**
das zumindest eine äußere Isolationselement (4) fest mit dem zumindest einen inneren elektrisch leitfähigen Element (2) verbunden ist, wobei zum Erzeugen einer festen Verbindung zwischen dem zumindest einen inneren elektrisch leitfähigen Element (2) und dem zumindest einen äußeren Isolationselement (4) zumindest ein Primer (3) vorgesehen ist.

2. Isoliertes elektrisch leitfähiges Element (1) nach Anspruch 1,
**dadurch gekennzeichnet, dass**
der zumindest eine Primer (3) mit der Oberfläche (20) des zumindest einen inneren elektrisch leitfähigen Elements (2) aufgrund chemischer Verbindung fest verbunden ist.

3. Isoliertes elektrisch leitfähiges Element (1) nach Anspruch 1 oder 2,
**dadurch gekennzeichnet, dass**
der zumindest eine Primer (3) mit dem zumindest einen äußeren Isolationselement (4) stoffschlüssig verbunden ist.

4. Isoliertes elektrisch leitfähiges Element (1) nach einem der vorstehenden Ansprüche,
**dadurch gekennzeichnet, dass**
das zumindest eine innere elektrisch leitfähige Element (2) zumindest im Bereich seiner Oberfläche (20) aus zumindest einem Metall oder zumindest einer Metalllegierung oder zumindest einem Material mit einer Hydroxyl-Gruppe oder Anhydrid-Gruppe besteht.

5. Isoliertes elektrisch leitfähiges Element (1) nach Anspruch 4,
**dadurch gekennzeichnet, dass**
das zumindest eine innere elektrisch leitfähige Element (2) zumindest im Bereich seiner Oberfläche (20) eines oder mehrere der Materialien Metall, wie Kupfer, Silber, Gold, Nickel, Zinn, Kohlenstoff oder eine oder mehrere Metalllegierung(en) oder Kohlenstofffasern enthält.

6. Isoliertes elektrisch leitfähiges Element (1) nach einem der vorstehenden Ansprüche,
**dadurch gekennzeichnet, dass**
das zumindest eine äußere Isolationselement (4) aus zumindest einem Kunststoffmaterial besteht.

7. Isoliertes elektrisch leitfähiges Element (1) nach Anspruch 6,
**dadurch gekennzeichnet, dass**
das zumindest eine äußere Isolationselement (4) aus zumindest einem Fluorpolymer, insbesondere Polytetrafluorethylenperfluoralkoxyvinylether (PFA), Polytetrafluorethylen (PTFE), Perfluorethylenpropylen (FEP), Ethylen-Tetrafluorethylen (ETFE) besteht, insbesondere aus modifiziertem PFA.

8. Isoliertes elektrisch leitfähiges Element (1) nach einem der vorstehenden Ansprüche,
**dadurch gekennzeichnet, dass**
der zumindest eine Primer (3) aus einem funktionalisiertem Fluorpolymer besteht.

9. Isoliertes elektrisch leitfähiges Element (1) nach einem der vorstehenden Ansprüche,
**dadurch gekennzeichnet, dass**
das isolierte elektrisch leitfähige Element (1) ein außenseitig durch das zumindest eine Isolationselement (4) isolierter elektrischer Leiter ist.

10. Isoliertes elektrisch leitfähiges Element (1) nach einem der vorstehenden Ansprüche,
**dadurch gekennzeichnet, dass**
das isolierte elektrisch leitfähige Element (1) ein durch das zumindest eine Isolationselement (4) außenseitig isolierter Rechteckleiter oder Rundleiter ist.

11. Verfahren zum Herstellen eines isolierten elektrisch leitfähigen Elements (1) nach einem der vorstehenden Ansprüche,
**dadurch gekennzeichnet, dass**
zumindest ein Primer (3) durch Extrusion auf die Oberfläche (20) zumindest eines inneren elektrisch leitfähigen Elements (2) und zumindest ein äußeres Isolationselement (4) durch Extrusion auf den zumindest einen Primer (3) aufgebracht wird.

12. Verfahren nach Anspruch 11,
**dadurch gekennzeichnet, dass**
der zumindest eine Primer (3) und das zumindest eine äußere Isolationselement (4) durch Coextrusion auf die Oberfläche (20) des zumindest einen inneren elektrisch leitfähigen Elements (2) aufgebracht werden, wobei eine Skinhülse oder Pinole zum Einstellen einer vorgebbaren Schichtdicke der zumindest zwei Materialien übereinander auf der Oberfläche (20) des zumindest einen inneren elektrisch leitfähigen Elements (2) vorgesehen ist.

13. Verfahren nach Anspruch 12,
**dadurch gekennzeichnet, dass**
kontinuierlich oder in Abständen der äußere Durchmesser des mit dem zumindest einen Primer (3) versehenen zumindest einen inneren elektrisch leitfähigen Elements (2) kontrolliert wird zum Überwachen und/oder Einstellen der Schichtdicke des Primers (3) vor dem Aufbringen des zumindest einen äußeren Isolationselements (4).
